# EUROPEAN PATENT SPECIFICATION

(11) **EP 1 859 965 B1**
(45) Date of publication and mention of the grant of the patent: **17.02.2010**
(21) Application number: 07251992.9
(22) Date of filing: 15.05.2007
(51) Int. Cl.: B60C 17/04, B60C 17/06

(54) **Supporter for run-flat tire and pneumatic run-flat tire using the same**
Träger für einen Notlaufreifen und Notlaufluftreifen damit
Support de pneu de roulage à plat et pneumatique de roulage à plat l'utilisant

(30) Priority: 24.05.2006 JP 2006143670
(43) Date of publication of application: 28.11.2007
(73) Proprietor: Bridgestone Corporation, Tokyo 104-8340 (JP)
(72) Inventor: Hatakeyama, Yoshikatsu c/o Bridgestone Corporation Technical Center, Kodaira-shi, Tokyo 187-8531 (JP); Kusano, Tomohiro c/o Bridgestone Corporation Technical Center, Kodaira-shi, Tokyo 187-8531 (JP)
(74) Representative: Whalley, Kevin

(56) References cited:
- EP-A- 1 116 606
- JP-A- 2004 058 917

## Description

The present invention relates to an annular supporter for a run-flat tire which is provided in the inside of a tire such that a car can run a considerable distance as it is when the tire is punctured and reduced in air pressure, and a pneumatic run-flat tire using the same.

As a pneumatic tire which can run flat, that is a tire (hereinafter referred to as a run-flat tire) which can safely run a certain distance even when the tire is punctured and reduced to 0 kg/cm2 in inner pressure, known is a run-flat tire of an inner ring type in which a metal- and/or synthetic resin-made annular inner ring (supporter) is mounted at a rim portion in an air chamber of the tire.

In the above inner ring type, a rotary inner ring type tire which is built in a rim and an annular inner ring type tire which has a supporting part and a leg part mounted at a rim are known (refer to, for example, published Japanese translation of PCT international publication for patent application No. 519279/2001, Japanese Patent Application Laid-Open No. 301410/2001, which is equivalent to EP-1116606 A; and Japanese Patent Application Laid-Open No. 189214/2004).

Among the above inner ring types, the rotary inner ring type has a problem of versatility in terms of requiring a special wheel for fixing the rotary inner ring. On the other hand, the annular inner ring type having a supporting part and a leg part has high versatility since it is mounted at a conventional rim.

In a supporter for a run-flat tire, annular rubber leg parts are adhered to both end parts of a supporting part, and the supporter is mounted at a rim via the above leg parts. When running on a tire in which the above supporter of the annular inner ring type having the supporting part and the leg part is mounted, acidic ions originating in compounded rubber as well as moisture are present in the inside of the tire, and temperature rises in the inside of the tire even in usual running, so that deterioration of the rubber in the leg part of the supporter due to the presence in the inside of the tire over a long period of time can not be ignored.

In the supporter for a run-flat tire, an adhered part of the supporting part has been subjected in some cases to roughening treatment by shot blasting in order to enhance adhesiveness between both end parts of the supporting part and the leg parts. However, it has been impossible to maintain high adhesive strength in the supporting part for a long time by the above roughening treatment.

The presence of uneven adhesion at the adhered part of the supporting part would cause corrosion, inferior adhesion and the like regardless of carrying out the roughening treatment to exert effects on the run-flat characteristics such as running stability, durability and the like in some cases.

Further, in the supporter to which a leg part is not adhered metal stays exposed, so that rust is produced in some cases whereby a problem of corrosion resistance is involved therein.

In run-flat running when an inner pressure of a tire is lowered because of any reason, a supporter comprising a composite body of a metal-made supporting part and a rubber leg part supports the load. In this connection, the supporting composite body is exposed to repeated distortion due to the load applied while rotating, and heat is generated due to this distortion.
A run-flat tire guarantees that run-flat running is possible to a certain degree over a distance (for example, it is possible to run 200 km or more at 80 km/hour) without having problems. However, the temperature of the supporting composite body after run-flat running the above distance exceeds, though depending on atmospheric temperature, 150°C in some cases, and a supporter which is adhered by applying a conventional two-liquid coating type vulcanization adhesive has involved the problem that peeling is caused at an interface between a top coating adhesive for the supporting part and a rubber composition of the rubber leg part, so that run-flat running a sufficient distance is impossible.

In run-flat running, the load is held by bringing a convex part of a supporting part into contact with a back side of a tire tread part. However, when a supported load is large because of a large vehicle weight, a large burden is applied onto the tire tread part, and the vehicle finally becomes impossible to run due to damage in the tire tread part in some cases.

An inner ring provided with a lubricant system in order to inhibit damage in a back side of a tread part is disclosed in Japanese Patent Application Laid-Open No. 163020/2001, but inhibition of damage in the tread by setting of a cross-sectional form of the supporting part is not specifically disclosed.

As described above, in an annular type run-flat supporter having a supporting part and a leg part, adhesive durability between the supporting part and the leg part has so far been a problem, and durability of a tire in run-flat running has been affected. In recent years, the present applicants have carried out intensive development in order to solve the above problem to complete a run-flat tire having advantages that adhesiveness between a supporting part and a leg part is high and that deterioration of the supporting part and damage of a contact part of the inside of the tire with the supporting part are reduced, and the present applicants have filed various patent applications (refer to Japanese Patent Application Laid-Open No. 189214/2004, Japanese Patent Application Laid-Open No. 58917/2004 and Japanese Patent Application Laid-Open No. 163020/2001).

The present invention intends to solve the problem of durability of a leg part rubber,to improve adhesion durability and further to improve durability of a run-flat tire. That is, it has been clarified by experiments that the inside of a run-flat tire reaches a considerably high temperature (150°C or higher in some cases) by impact exerted from a road surface in running while supporting the tread part of the tire from the inside thereof in run-flat running, and peeling at the adhered part has occurred due to exposure to the above situation for a long time to prevent further running. On the other hand, when a run-flat tire supporter in which high adhesiveness is maintained at an adhered part and which is excellent in adhesion durability has been provided, if a leg part rubber itself comprises a rubber composition having low durability, safe and stable use state can not be maintained over a long period of time under the environment of continuous impact and high temperature and thus the leg part rubber of the supporter for a run-flat tire has potentially involved a problem which has to be solved from the viewpoint of the rubber composition.

Accordingly, the existing situation is that a leg part rubber for a run-flat tire supporter which enables safe and stable run-flat running over a certain distance under a severe environment in run-flat running and which has a higher performance is required to be developed.

Intensive researches repeated by the present inventors in order to solve the problems described above have resulted in finding that a supporter for a run-flat tire which is excellent in run-flat durability over a long period of time and a pneumatic run-flat tire equipped with the same are obtained by constituting a supporting part of a metal and a leg part rubber of a rubber composition comprising a rubber component containing a specific amount or more of a conjugate diene base rubber per 100 mass parts of the rubber component, and thus the present invention has been accomplished.

That is, the present invention comprises the following items (1) to (8).
(1) An annular supporter for a run-flat tire which comprises a supporting part and a leg part and which can support a load in run-flat running, wherein the supporting part is made of a metal and the leg part comprises a rubber composition comprising a rubber component which contains 60 mass parts or more of a conjugate diene base rubber per 100 mass parts of the rubber component.
(2) The supporter for a run-flat tire as described in the above item (1), wherein the conjugate diene base rubber is isoprene rubber or natural rubber.
(3) The supporter for a run-flat tire as described in the above item (1) or (2), wherein the rubber composition constituting the leg part has a sulfur content of less than 4 mass parts per 100 mass parts of the rubber component.
(4) The supporter for a run-flat tire as described in any one of the above items (1) to (3), wherein the rubber composition has a tensile strength (TB) of 18 MPa or more before commencement of use.
(5) The supporter for a run-flat tire as described in any one of the above items (1) to (4), wherein the rubber composition has a tensile strength (TB) of 11 MPa or more after being left standing at a temperature of 100°C for 6 days.
(6) The supporter for a run-flat tire as described in any one of the above items (1) to (5), wherein the rubber composition has a dynamic modulus of elasticity (E', in 1 % distortion) of 5 MPa or more at 24°C and 4 MPa or more at 100°C before commencement of use.
(7) The supporter for a run-flat tire as described in any one of the above items (1) to (6), wherein the rubber composition has a loss tangent (tan δ, in 1 % distortion) of 0.30 or less at 24°C and 0.30 or less at 100°C before commencement of use.
(8) A pneumatic run-flat tire equipped with the supporter for a run-flat tire as described in any one of the above items (1) to (7).

The supporter for a run-flat tire according to the present invention comprises a leg part rubber which has excellent impact absorbing property, deterioration resistance and low heat build-up, and the run-flat tire of the present invention equipped with the above supporter is an excellent run-flat tire which can run flat a long distance more stably for long time.

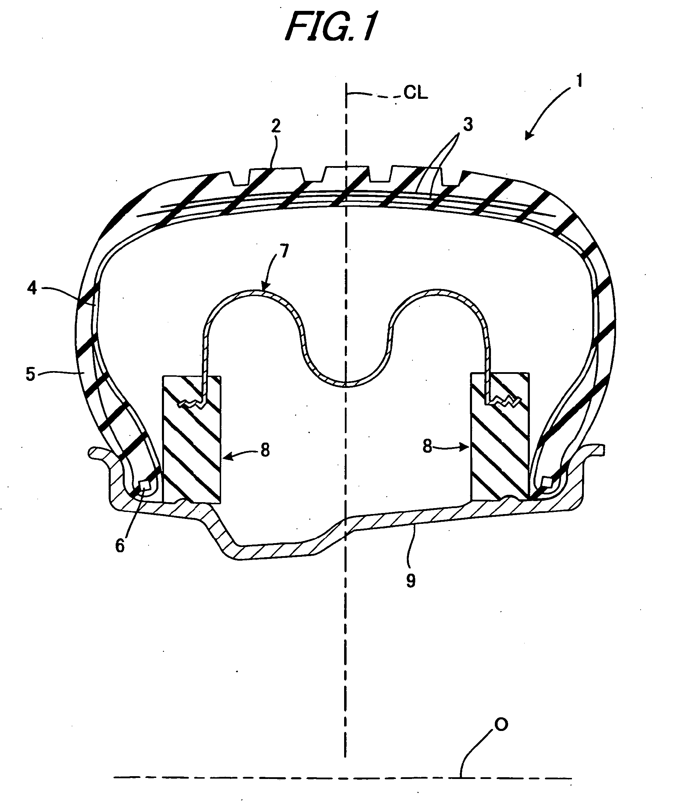

Reference is made to the accompanying drawing, wherein
Fig. 1 is a cross-sectional drawing of a pneumatic run-flat tire of the present invention showing a cross-section (only an upper side part in a cross section along a tire rotation axis O) cut along a tire rotation axis in mounting the tire in a rim.

The drawing shows a run-flat tire 1 which comprises a tread part 2, a belt layer 3, a carcass 4, a tire side part 5, a bead core 6, a run-flat supporter 7, a leg part rubber 8, and a rim 9.

The embodiments of the present invention shall be explained below in detail.

Fig. 1 shows one example of the pneumatic run-flat tire of the present invention, and it is a cross-sectional drawing showing a cross-section (only an upper side part in a cross section along a tire rotation axis O) cut the tire along a tire rotation axis in mounting the tire in a rim.

The leg part rubber (numeral 8 shown in the drawing) of the supporter for a run-flat tire according to the present invention is characterized by comprising a rubber composition comprising a rubber component containing 60 mass parts or more of a conjugate diene base rubber per 100 mass parts of the rubber component.

In the production of the supporter according to the present invention, a metallic flat plate is molded into, for example, a form shown in Fig. 1 by a molding method such as roll forming and the like to prepare a supporting part 7, and then an end part of the supporting part in an axis direction is applied with an adhesive and adhered to a leg part rubber, whereby a supporter in which leg parts are formed at both end parts is prepared.

A material used for the metallic flat plate includes iron, high tension steel, stainless steel, aluminium and the like.

Synthetic resin base, phenol resin base and silicone base adhesives for rubber are preferably used as the adhesive used for adhering the supporting part and the leg part rubber.

When the leg part rubber comprises a rubber composition comprising a rubber component containing less than 60 mass parts of a conjugate diene base rubber per 100 mass parts of the rubber component, an effect (impact resistance) of absorbing impact coming from a run-flat supporter in run-flat running is inferior. Accordingly, a compounding amount of the conjugate diene base rubber in the leg part rubber is 60 mass parts or more, most preferably 100 mass parts per 100 mass parts of the rubber component. The leg part rubber comprising the rubber component containing 60 mass parts or more of the conjugate diene base rubber per 100 mass parts of the rubber component makes it possible to concurrently achieve improvement in adhesiveness to the metal-made run-flat supporting part and improvement in durability of the rubber.

To be more specific, the conjugate diene base rubber described above is preferably isoprene rubber or natural rubber. The leg part rubber of the supporter for a run-flat tire can stably support the supporter for a run-flat tire in run-flat running and is endurable against impact from the above supporter. Isoprene rubber and natural rubber are the principal constitutional elements of the leg part rubber of the supporter of the present invention because of their excellent fracture resistance.

When a leg part rubber does not comprise a rubber composition comprising a rubber component containing 60 mass parts or more of the conjugate diene base rubber per 100 mass parts of the rubber component, the effects (elastic modulus and tensile strength (TB)) of the present invention can not be exhibited. Natural rubber and isoprene base rubber have a large tensile strength (TB) and are excellent in low heat build-up, and therefore they are the most suitable material for the leg part rubber of the present invention. On the other hand, SBR which is a synthetic rubber has a large loss tangent (tan δ) and is inferior in low heat build-up, and as a result thereof, time spent until reaching a temperature limit is short. Further, BR has small TB as compared with those of natural rubber and isoprene base rubber, and therefore they are a little inferior in performances as a rubber component for the leg part rubber of the supporter of the present invention.

The rubber composition for leg part rubber in the present invention described above may be blended with sulfur of less than 4 mass parts per 100 mass parts of the rubber component. It is a matter of course that sulfur is blended for the purpose of vulcanization, and since a sulfur blending amount of 4 mass parts or more enhances an elastic modulus of the rubber composition, the leg part rubber has improved impact absorbing property, but reduction in the deterioration resistance which is indispensable to the leg part rubber is brought about. Accordingly, it is not preferred.

The leg part rubber has a tensile strength (TB) of 18 MPa or more before commencement of use, that is in an unused state. This is prescribed as a tensile strength (TB) which the leg part rubber of the supporter for a run-flat tire is expected to be provided with at least before starting run-flat running. If the tensile strength (TB) before commencement of use, that is, in an unused state is 18 MPa or more, safety and durability of the supporter of the present invention are secured. The tensile strength (TB) before commencement of use, that is, in an unused state is more preferably 19 MPa or more, further preferably 21 MPa or more. If the above tensile strength (TB) is less than 18 MPa, it is difficult to sufficiently endure severe run-flat running, and the rubber composition is not suited as the leg part rubber of the supporter of the present invention.

The leg part rubber suitably has a tensile strength (TB) of 11 MPa or more after being left standing at a temperature of 100°C for 6 days in the air. The leg part rubber of the supporter for a run-flat tire is estimated to be heated at a temperature of at least 100°C or higher by run-flat running, and therefore the above range is a requisite imposed to the leg part rubber as durability required in order to endure impact exerted from a road surface via the supporter at 100°C which is assumed to be the lowest in the run-flat running. If the tensile strength (TB) after being left standing at a temperature of 100°C for 6 days in the air is 11 MPa or more, a safety performance of the leg part rubber of the supporter for a run-flat tire is high. If the above tensile strength (TB) is less than 11 MPa, cracks are produced in the rubber at an end stage of running to make it difficult to sufficiently endure severe run-flat running further over a longer distance, and therefore that is not suited as the leg part rubber of the supporter of the present invention. In the leg part rubber of the supporter of the present invention, the above tensile strength (TB) is more preferably 13 MPa or more, further preferably 15 MPa or more.

The leg part rubber suitably has a dynamic modulus of elasticity (E', in 1 % distortion) of 5 MPa or more at 24°C before commencement of use, that is in an unused state and a dynamic modulus of elasticity (E', in 1 % distortion) of 4 MPa or more after being left standing at a temperature of 100°C for 6 days in the air. The leg part rubber of the supporter for a run-flat tire undergoes periodical impact from a road surface via the supporter in run-flat running, and the above range is prescribed in order to endure the impact. The above leg part rubber secures the performances of the supporter of the present invention and can sufficiently endure severe run-flat running. The leg part rubber has more preferably a dynamic modulus of elasticity (E', in 1 % distortion) of 13 MPa or more at 24°C before commencement of use, that is, in an unused state and a dynamic modulus of elasticity (E', in 1 % distortion) of 8 MPa or more after being left standing at a temperature of 100°C for 6 days in the air.

The leg part rubbersuitably has a loss tangent (tan δ, in 1 % distortion) of 0.30 or less at 24°C before commencement of use, that is, in an unused state and a loss tangent (tan δ, in 1 % distortion) of 0.30 or less after being left standing at a temperature of 100°C for 6 days in the air. The larger the loss tangent is, the higher the heat build-up grows, and the more quickly the rubber reaches a temperature limit, so that the durability is reduced. That is, the loss tangent is prescribed from the viewpoint of the low heat build-up which is expected to occur. The leg part rubber of the present invention has more preferably a loss tangent (tan δ, in 1 % distortion) of 0.25 or less at 24°C before commencement of use, that is, in an unused state and a loss tangent (tan δ, in 1 % distortion) of 0.25 or less after being left standing at a temperature of 100°C for 6 days in the air, and the above values are further preferably 0.20 or less and 0.15 or less respectively.

A run-flat tire of the present invention is a run-flat tire equipped with the supporter described above, and therefore has excellent safety and run-flat running property as a run-flat tire.

The natural rubber component constituting the leg part rubber of the supporter described above shall not specifically be restricted, and NR RSS#4 can suitably be used. Further, the conjugate diene base rubber component other than natural rubber shall not specifically be restricted, and IR can suitably be used, and further SBR 1500, BR01 and the like can also be used.

The leg part rubber of the supporter of the present invention may be blended with carbon black. Carbon black which may be blended is particularly preferably FEF and/or HAF from the viewpoint of the reinforcing property and the elasticity (dynamic modulus of elasticity). However, blending of carbon black with the rubber composition leads to, on the other hand, bringing about reduction in workability and degradation in the heat build-up. Accordingly, a blending amount of carbon black is preferably 30 to 70 mass parts per 100 mass parts of the rubber component, and a blending amount exceeding 90 mass parts is not preferred

The leg part rubber of the supporter of the present invention may further contain spindle oil, antioxidants and heat stabilizers, waxes, zinc oxide, stearic acid, vulcanization accelerators, DCPD resins and the like as optional compounding ingredients. In this case, the amounts (mass parts) of the above optional ingredients which may be contained in the rubber composition constituting the leg part rubber are preferably 0 to 5 mass parts for spindle oil, 0 to 3 mass parts for antioxidants and heat stabilizers, 0 to 5 mass parts for waxes, 3 to 5 mass parts for zinc oxide, 1 to 5 mass parts for stearic acid, 0.5 to 3 mass parts for vulcanization accelerators and 0 to 5 mass parts for DCPD resins each per 100 mass parts of the rubber component.

The constitutions and the effects of the present invention shall be specifically shown below with reference to examples. The present invention shall by no means be restricted to the following examples.

### Preparation of rubber composition:

Rubber compositions having formulations shown in the following Table 1 were prepared. NR RSS#4 as a natural rubber component, SBR1500, BR01 or IIR as a synthetic rubber component blended with the natural rubber component, FEF or HAF as carbon black, in addition thereto, spindle oil, a heat stabilizer (Nonflex RD), an antioxidant (Nocrac 6C), wax, zinc oxide, stearic acid, a vulcanization accelerator (Nocceler CZ), sulfur and a DCPD resin were kneaded by means of a Banbury mixer and vulcanized at 145°C for 30 minutes. The rubber compositions A to F thus obtained were used to produce run-flat tires, and the following performances of the run-flat tires were evaluated. The respective rubber compositions A to F obtained were measured for dynamic modulus of elasticity, loss tangent and tensile strength by methods shown below.

### (1) Dynamic modulus of elasticity (E') and loss tangent (tan δ)

A sheet having a width of 150 mm and a length of 150 mm was cut out from a slab sheet having a thickness of 2 mm obtained by vulcanizing the rubber composition under the conditions of 160°C and 15 minutes to prepare a measuring sample. This sample was measured for dynamic modulus of elasticity (E') and loss tangent (tan δ) by means of a spectrometer manufactured by Ueshima Seisakusho Co., Ltd. under the conditions of a chuck to chuck distance of 10 mm, an initial distortion of 200 µm, a dynamic distortion of 1 %, a frequency of 52 Hz, a measurement initiation temperature of 24°C, a heating speed of 3°C/minute and a measurement termination temperature of 250°C.

### (2) Tensile strength (TB)

A tensile test was carried out based on JIS-K-6251 using a JIS No. 3 test piece to measure a tensile strength (TB) at break at 24°C.

### (3) Run-flat durability

The rubber composition described above was used for a leg part rubber of a supporter for a run-flat tire to produce a radial tire of a size 235/55R18 for passenger cars having the structure shown in Fig. 1 according to a conventional process, and run-flat durability of the tire was evaluated by a method shown below.

Each trial tire was mounted in a rim at atmospheric pressure and charged with air to an inner pressure of 230 kPa, and then it was left standing at a room temperature of 38°C for 24 hours. Thereafter, a core of the valve was drawn to reduce the inner pressure to atmospheric pressure, and the tire was subjected to a drum running test under the conditions of a load of 4.17 kN (425 kg), a speed of 89 km/h and a room temperature of 38°C. In the above test, a distance traveled until troubles were caused was measured and shown by an index with a distance in Comparative Example 2 set to 100, and the index was set as an indicator of the run-flat durability. It is shown that the larger the index value, the better the run-flat durability. Results obtained by testing the run-flat durability of the run-flat tires are shown in the following Table 1.

**Table 1**

| | Example | | | | | | | | | | Comparative Example | |
|---|---|---|---|---|---|---|---|---|---|---|---|---|
| | 1 | 2 | 3 | 4 | 5 | 6 | 7 | 8 | 9 | 10 | 1 | 2 |
| IIR | | | | | | 40 | 30 | | | | 60 | 50 |
| NR | 100 | 100 | 60 | 50 | | 60 | 70 | | | 50 | 40 | 50 |
| SBR1500 | | | 40 | 50 | 70 | | | 70 | 70 | | | |
| BR01 | | | | | 30 | | | 30 | 30 | 50 | | |
| the addition amounts of the following various additives are mass parts per 100 mass parts of the total amount of the conjugate diene base rubber comoonents described above | | | | | | | | | | | | |
| FEF | 60 | | 60 | 60 | 60 | 60 | 60 | 60 | 100 | 50 | 60 | 60 |
| HAF | | 70 | | | | | | | | | | |
| Sulfur | 2 | 2 | 2 | 2 | 2 | 3.5 | 3.5 | 4.5 | 3.5 | 1.5 | 3.5 | 3.5 |
| Spindle oil | 2 | 2 | 2 | 2 | 2 | 2 | 2 | 2 | 2 | 2 | 2 | 2 |
| Nonflex RD 1) | 1 | 1 | 1 | 1 | 1 | 1 | 1 | 1 | 1 | 1 | 1 | 1 |
| Nocrac 6C 2) | 2 | 2 | 2 | 2 | 2 | 2 | 2 | 2 | 2 | 2 | 2 | 2 |
| Wax | 2 | 2 | 2 | 2 | 2 | 2 | 2 | 2 | 2 | 2 | 2 | 2 |
| Zinc oxide | 5 | 5 | 5 | 5 | 5 | 5 | 5 | 5 | 5 | 5 | 5 | 5 |
| Stearic acid | 3 | 3 | 3 | 3 | 3 | 3 | 3 | 3 | 3 | 3 | 3 | 3 |
| Nocceler CZ 3) | 1.5 | 1.5 | 1.5 | 1.5 | 1.5 | 1.5 | 1.5 | 1.5 | 1.5 | 1.5 | 1.5 | 1.5 |
| DCPD resin | 5 | 5 | 5 | 5 | 5 | 5 | 5 | 5 | 5 | 5 | 5 | 5 |
| | | | | | | | | | | | | |
| TB in unused state | 23.0 | 20.0 | 18.6 | 18.3 | 18.9 | 18.2 | 19.1 | 19.2 | 19.5 | 15.3 | 16.5 | 17.3 |
| TB after 100°C X 6 days | 17.0 | 15.8 | 11.2 | 11.4 | 12.2 | 11.8 | 11.9 | 10.4 | 10.7 | 10.1 | 10.4 | 10.5 |
| E' (room temperature, in 1 % distortion) | 8.0 | 18.0 | 9.0 | 10.5 | 11.1 | 9.8 | 9.3 | 13.2 | 47.8 | 4.5 | 11.6 | 10.5 |
| E' (100°C, in 1 % distortion) | 5.0 | 10.0 | 7.9 | 8.3 | 9.2 | 7.2 | 6.8 | 10.8 | 35.2 | 3.5 | 8.6 | 8.1 |
| Tan δ (room temperature, in 1 % distortion) | 0.15 | 0.28 | 0.21 | 0.26 | 0.28 | 0.29 | 0.27 | 0.22 | 0.38 | 0.15 | 0.55 | 0.42 |
| Tan δ (100°C, in 1 % distortion) | 0.08 | 0.21 | 0.15 | 0.22 | 0.25 | 0.25 | 0.23 | 0.19 | 0.33 | 0.09 | 0.43 | 0.35 |
| Run-flat durability | 915 | 795 | 633 | 600 | 603 | 597 | 612 | 363 | 256 | 232 | 97 | 100 |

| | | | | | | | | | | | | |
|---|---|---|---|---|---|---|---|---|---|---|---|---|
| 1) Heat stabilizer: manufactured by Seiko Chemical Co., Ltd. 2) Antioxidant: manufactured by Ouchishinko Chemical Industrial Co., Ltd. 3) Vulcanization accelerator: manufactured by Ouchishinko Chemical Industrial Co., Ltd. | | | | | | | | | | | | |

As can be seen from the results shown in Table 1 described above, satisfactory evaluation of the run-flat durability could not be obtained from the run-flat tires using the leg part rubbers of a supporter in which the rubber component in the rubber composition does not contain the prescribed amount of the conjugate diene base rubber.

## Claims

1. An annular supporter for a run-flat tire (1) which comprises a supporting part (7) and a leg part (8) and which can support a load in run-flat running, wherein the supporting part is made of a metal and the leg part comprises a rubber composition comprising a rubber component which contains 60 mass parts or more of a conjugate diene base rubber per 100 mass parts of the rubber component.

2. A supporter for a run-flat tire as claimed in claim 1, wherein the conjugate diene base rubber is isoprene rubber or natural rubber.

3. A supporter for a run-flat tire as claimed in claim 1 or 2, wherein the rubber composition constituting the leg part has a sulfur content of less than 4 mass parts per 100 mass parts of the rubber component.

4. A supporter for a run-flat tire as claimed in any one of claims 1 to 3, wherein the rubber composition has a tensile strength (TB) of 18 MPa or more before commencement of use.

5. A supporter for a run-flat tire as claimed in any one of claims 1 to 4, wherein the rubber composition has a tensile strength (TB) of 11 MPa or more after being left standing at a temperature of 100°C for 6 days.

6. A supporter for a run-flat tire as claimed in any one of claims 1 to 5, wherein the rubber composition has a dynamic modulus of elasticity (E', in 1 % distortion) of 5 MPa or more at 24°C and 4 MPa or more at 100°C before commencement of use.

7. A supporter for a run-flat tire as claimed in any one of claims 1 to 6, wherein the rubber composition has a loss tangent (tan δ, in 1 % distortion) of 0.30 or less at 24°C and 0.30 or less at 100°C before commencement of use.

8. A pneumatic run-flat tire equipped with a supporter for a run-flat tire as claimed in any one of claims 1 to 7.

## Patentansprüche

1. Ringförmiger Träger für einen Notlaufreifen (1), wobei der Träger einen tragenden Teil (7) und einen Fußteil (8) umfasst und beim Fahren im Notlauf eine Last tragen kann, wobei der tragende Teil aus einem Metall hergestellt ist und der Fußteil eine Kautschukzusammensetzung umfasst, die einen Kautschukbestandteil umfasst, der 60 Masseteile oder mehr eines konjugierten Dienkautschuks auf 100 Masseteile des Kautschukbestandteils enthält.

2. Träger für einen Notlaufreifen nach Anspruch 1, wobei der konjugierte Dienkautschuk Isoprenkautschuk oder Naturkautschuk ist.

3. Träger für einen Notlaufreifen nach Anspruch 1 oder 2, wobei die Kautschukzusammensetzung, die den Fußteil darstellt, einen Schwefelgehalt von weniger als 4 Masseteilen auf 100 Masseteile des Kautschukbestandteils hat.

4. Träger für einen Notlaufreifen nach einem der Ansprüche 1 bis 3, wobei die Kautschukzusammensetzung vor dem Beginn der Verwendung eine Zugfestigkeit (TB) von 18 MPa oder mehr hat.

5. Träger für einen Notlaufreifen nach einem der Ansprüche 1 bis 4, wobei die Kautschukzusammensetzung, nachdem sie 6 Tage bei einer Temperatur von 100°C stehengelassen wurde, eine Zugfestigkeit (TB) von 11 MPa oder mehr hat.

6. Träger für einen Notlaufreifen nach einem der Ansprüche 1 bis 5, wobei die Kautschukzusammensetzung vor dem Beginn der Verwendung einen dynamischen Elastizitätsmodul (E', bei 1%Verwindung) von 5 MPa oder mehr bei 24°C und 4 MPa oder mehr bei 100°C hat.

7. Träger für einen Notlaufreifen nach einem der Ansprüche 1 bis 6, wobei die Kautschukzusammensetzung vor dem Beginn der Verwendung eine Verlusttangente (tan ä, bei 1%Verwindung) von 0,30 oder weniger bei 24°C und 0,30 oder weniger bei 100°C hat.

8. Pneumatischer Notlaufreifen, der mit einem Träger für einen Notlaufreifen nach einem der Ansprüche 1 bis 7 ausgestattet ist.

## Revendications

1. Support annulaire pour un bandage pneumatique à roulage à plat (1), comprenant une partie de support (7) et une partie de branche (8), et pouvant supporter une charge lors du roulage à plat, la partie de support étant composée d'un métal et la partie de branche comprenant une composition de caoutchouc comprenant un composant de caoutchouc contenant 60 parties en poids ou plus d'un caoutchouc à base de diène conjugué pour 100 parties en poids du composant de caoutchouc.

2. Support pour un bandage pneumatique à roulage à plat selon la revendication 1, dans lequel le caoutchouc à base de diène conjugué est un caoutchouc isoprène ou un caoutchouc naturel.

3. Support pour un bandage pneumatique à roulage à plat selon les revendications 1 ou 2, dans lequel la composition de caoutchouc constituant la partie de branche a une teneur en soufre de moins de 4 parties en poids pour 100 parties en poids du composant de caoutchouc.

4. Support pour un bandage pneumatique à roulage à plat selon l'une quelconque des revendications 1 à 3, dans lequel la composition de caoutchouc présente une résistance à la traction (TB) de 18 MPa ou plus avant le début de l'utilisation.

5. Support pour un bandage pneumatique à roulage à plat selon l'une quelconque des revendications 1 à 4, dans lequel la composition de caoutchouc présente une résistance à la traction (TB) de 11 MPa ou plus après un séjour à une température de 100°C pendant 6 jours.

6. Support pour un bandage pneumatique à roulage à plat selon l'une quelconque des revendications 1 à 5, dans lequel la composition de caoutchouc présente un module d'élasticité dynamique (E', en présence d'une distorsion de 1%) de 5 MPa ou plus à 24°C et de 4 MPa ou plus à 100° C avant le début de l'utilisation.

7. Support pour un bandage pneumatique à roulage à plat selon l'une quelconque des revendications 1 à 6, dans lequel la composition de caoutchouc présente une tangente d'angle de pertes (tan δ, en présence d'une distorsion de 1%) de 0,30 ou moins à 24°C et de 0,30 ou moins à 100°C avant le début de l'utilisation.

8. Bandage pneumatique à roulage à plat équipé d'un support pour un bandage pneumatique à roulage à plat selon l'une quelconque des revendications 1 à 7.
